# EUROPEAN PATENT APPLICATION

(11) **EP 4 329 022 A1**
(43) Date of publication of application: **28.02.2024**
(21) Application number: 21938041.7
(22) Date of filing: 25.11.2021
(51) Int. Cl.: H01M 8/0258, H01M 8/026, H01M 8/021, H01M 8/124

(54) **SEPARATOR PLATE ASSEMBLY FOR FUEL CELL CAPABLE OF FORMING VARIABLE FLOW PATH PATTERN**

(30) Priority: 20.04.2021 KR 20210051210
(71) Applicant: Jin Young Precision Machine Co., Ltd., Hwaseong-si, Gyeonggi-do 18583 (KR)
(72) Inventor: JEON, Yong-Geun, Incheon 21523 (KR); CHOI, Byoung-Sun, Osan-si, Gyeonggi-do 18143 (KR); RYU, Dong-Soo, Incheon 21523 (KR)
(74) Representative: Plasseraud IP
(86) International application number: PCT/KR2021/017487
(87) International publication number: WO 2022/225125

(57) **Abstract**

The purpose of the present disclosure is to provide a separator plate assembly for a solid oxide fuel cell, the separator plate assembly being capable of forming a variable flow path and comprising: a base plate; a flow path forming block; and a gas flow path. According to the present disclosure, by arranging the flow path forming block on the base plate to form the gas flow path, the precision and productivity of flow path shape processing can be improved, and various gas flow paths can be variably formed on the base plate.

## Description

### [Technical Field]

The present disclosure relates to a separator plate assembly for a fuel cell, and more particularly, to a separator plate assembly for a fuel cell capable of forming a variable flow path pattern to form gas flow paths of various patterns on a base plate by arranging flow path forming blocks on the base plate having coupling protrusions arranged in a grid pattern.

This application claims the priority benefit of Korean Patent Application No. 10-2021-0051210, filed on April 20, 2021, in the Korean Intellectual Property Office, the disclosure of which is incorporated herein by reference.

### [Background Art]

In general, a solid oxide fuel cell (SOFC) operates at the highest temperature (700 to 900°C) among fuel cells, and since the components are all solid, solid oxide fuel cells have a simple structure compared to other fuel cells, do not have problems with electrolyte loss, replenishment and corrosion, eliminate the need for precious metal catalysts and are easy to supply fuels through direct internal reforming.

Additionally, it is possible to achieve combined heat and power production using waste heat due to high temperature gas emission. Due to this advantage, many studies are now done on solid oxide fuel cells.

A solid oxide fuel cell is an electrochemical energy conversion device, and includes an oxygen ion conducting electrolyte, and an air electrode and a fuel electrode on two surfaces.

Oxygen ions produced by reduction reaction of oxygen at the air electrode move to the fuel electrode through the electrolyte and react with hydrogen supplied to the fuel electrode to produce water, and in this instance, electrons are produced at the fuel electrode and consumed at the air electrode, so when the two electrodes are connected to each other, electricity flows.

However, since a unit cell including the air electrode, the electrolyte and the fuel electrode produces a very small amount of power, a plurality of unit cells may be stacked to form a fuel cell so as to produce considerable power output, and further, may be used in a wide range of power generation system applications.

For the stacking, it is necessary to electrically connect the air electrode of a unit cell to the fuel electrode of another unit cell, and to this end, a separator plate (interconnect) is used.

### [Disclosure]

### [Technical Problem]

The present disclosure is directed to providing a separator plate assembly for a fuel cell for improving precision and productivity in flow path shape processing by forming a gas flow path by arranging flow path forming blocks on a base plate rather than forming the gas flow path in the base plate by an etching process.

The present disclosure is further directed to providing a separator plate assembly for a fuel cell capable of variably forming various gas flow paths on a base plate by arranging coupling protrusions on the base plate in a grid pattern and arranging flow path forming blocks of various shapes and various numbers in various patterns.

The objective of the present disclosure is not limited thereto and these and other objectives will be clearly understood by those skilled in the art from the following description.

### [Technical Solution]

To achieve the above-described technical objective, an embodiment of the present disclosure provides a separator plate assembly for a solid oxide fuel cell capable of forming a variable flow path, including a base plate having a plurality of coupling protrusions protruding in a direction toward one side and arranged spaced apart from each other; at least one flow path forming block having coupling holes which are coupled to the coupling protrusions, the flow path forming block arranged on the base plate by the coupling of the coupling protrusions and the coupling holes; and a gas flow path formed in varying patterns depending on a shape or arrangement pattern of the flow path forming block, and configured to allow a reactive gas supplied from outside to flow therein.

Additionally, there is provided the separator plate assembly for the fuel cell capable of forming the variable flow path, wherein the plurality of coupling protrusions is arranged in a grid pattern.

Additionally, there is provided the separator plate assembly for the fuel cell capable of forming the variable flow path, wherein the flow path forming block is formed in a quadrilateral prism shape, and has at least two coupling holes in a lengthwise direction.

Additionally, there is provided the separator plate assembly for the fuel cell capable of forming the variable flow path, wherein the flow path forming block is circular in horizontal cross section, and has at least one coupling hole inside.

Additionally, there is provided the separator plate assembly for the fuel cell capable of forming the variable flow path, wherein the flow path forming block is hexagonal in horizontal cross section, and has at least one coupling hole inside.

Additionally, there is provided the separator plate assembly for the fuel cell capable of forming the variable flow path, wherein the base plate is made of a material including a Fe-Cr alloy.

### [Advantageous Effects]

According to an embodiment of the present disclosure, the gas flow path may be formed by arranging the flow path forming blocks on the base plate rather than forming the gas flow path in the base plate by an etching process, thereby improving precision and productivity in flow path shape processing.

Additionally, it may be possible to variably form various gas flow paths on the base plate by arranging the coupling protrusions on the base plate in a grid pattern and arranging the flow path forming blocks of various shapes and numbers in various patterns.

### [Description of Drawings]

FIG. 1 is an exploded perspective view showing a full layout of a separator plate assembly for a fuel cell according to an embodiment of the present disclosure.
FIG. 2 is an assembled perspective view showing a full layout of a separator plate assembly for a fuel cell according to an embodiment of the present disclosure.
FIG. 3 is a cross-sectional view taken along the line A-A in FIG. 2 showing a full layout of a separator plate assembly for a fuel cell according to an embodiment of the present disclosure.
FIG. 4 is a top view showing an embodiment of the arrangement of coupling protrusions of the present disclosure.
FIG. 5 is a top view showing another embodiment of the arrangement of coupling protrusions of the present disclosure.
FIG. 6 is a diagram showing a cross section and a partial enlarged view of a press-fit member coupled to a separator plate assembly for a fuel cell according to an embodiment of the present disclosure.
FIG. 7 is a perspective view showing a flow path forming block according to an embodiment of the present disclosure.
FIG. 8 is a perspective view showing a flow path forming block according to another embodiment of the present disclosure.
FIG. 9 is a perspective view showing a flow path forming block according to still another embodiment of the present disclosure.
FIG. 10 is a perspective view showing an embodiment of forming a gas flow path by arranging flow path forming blocks on a base plate of the present disclosure.
FIG. 11 is a perspective view showing another embodiment of forming a gas flow path by arranging flow path forming blocks on a base plate of the present disclosure.
FIG. 12 is a perspective view showing still another embodiment of forming a gas flow path by arranging flow path forming blocks on a base plate of the present disclosure.
FIG. 13 is a cross-sectional view showing a cell of a fuel cell interposed between separator plate assemblies for fuel cells according to an embodiment of the present disclosure.

### [Detailed Description of Main Elements]

10: Cell
11: Negative electrode layer
13: Electrolyte layer
15: Positive electrode layer
100: Base plate
110: Coupling protrusion
130: Recess
150: Protective coating layer
170: Press-fit member
200: Flow path forming block
210: Coupling hole
300: Gas flow path

### [Best Mode]

Hereinafter, some embodiments of the present disclosure will be described in detail through the exemplary drawings. In affixing the reference signs to the elements of each drawing, it should be noted that the identical elements have the identical signs as possible although they are shown in different drawings. Additionally, in describing the present disclosure, when it is determined that a certain detailed description of relevant known features or functions may obscure the subject matter of the present disclosure, the detailed description is omitted.

Additionally, in describing the elements of the present disclosure, the terms "first", "second", A, B, (a), (b) or the like may be used. These terms are used to distinguish one element from another, and the nature, sequence or order of the corresponding elements are not limited by the terms. When an element is referred to as being "connected to", "coupled to" or "joined to" another element, the element may be directly connected or joined to the other element, but it should be understood that intervening elements may be "connected", "coupled" or "joined" between each element.

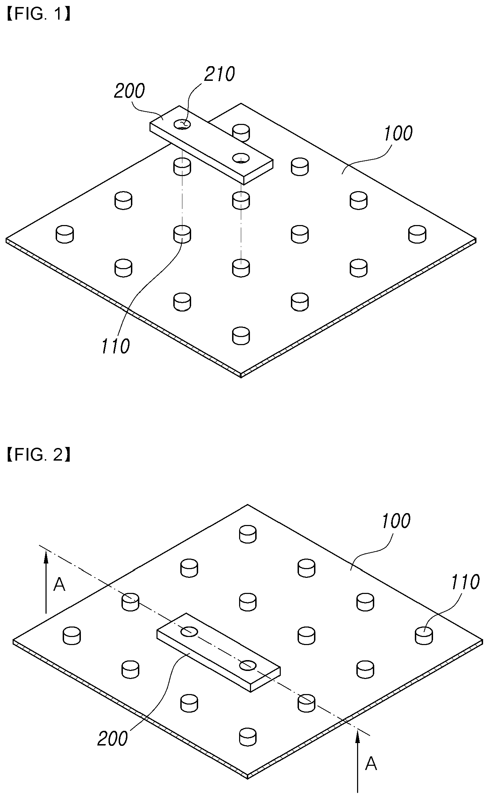

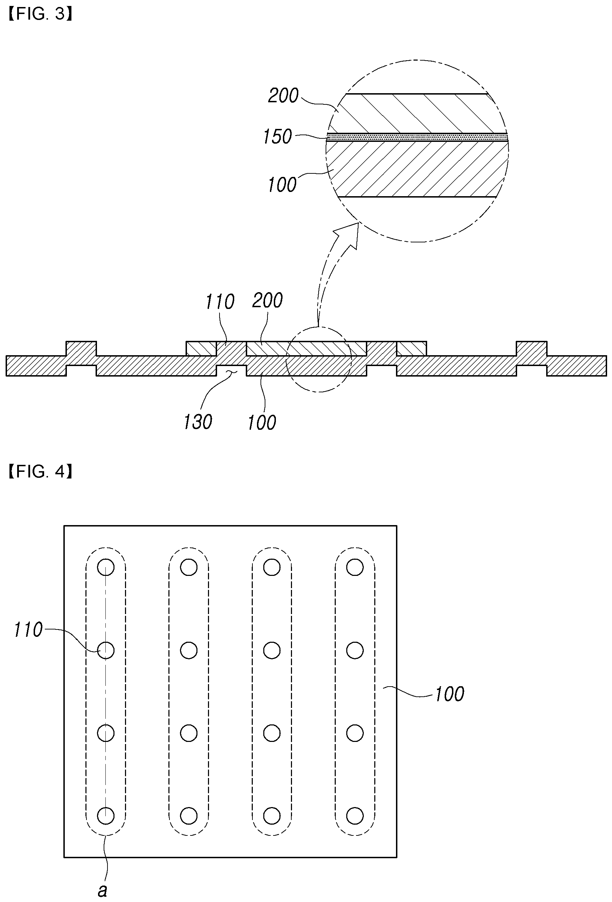

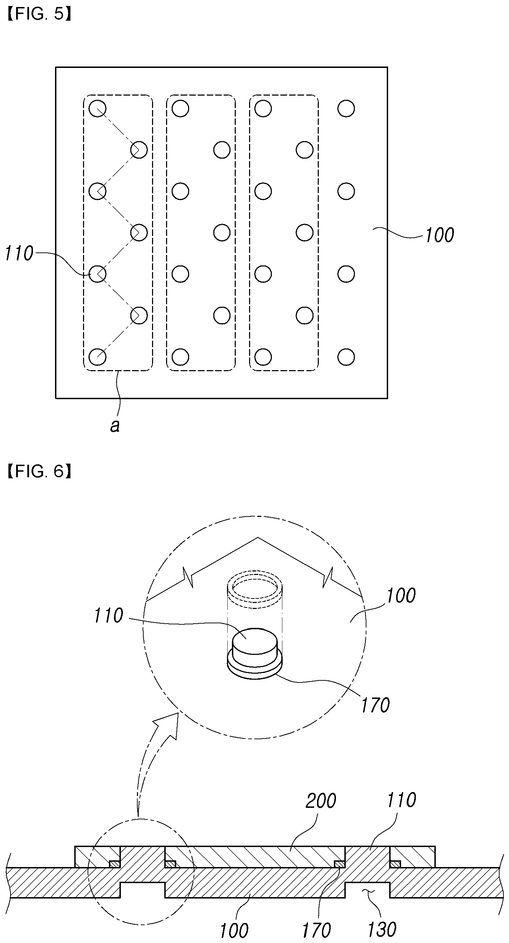

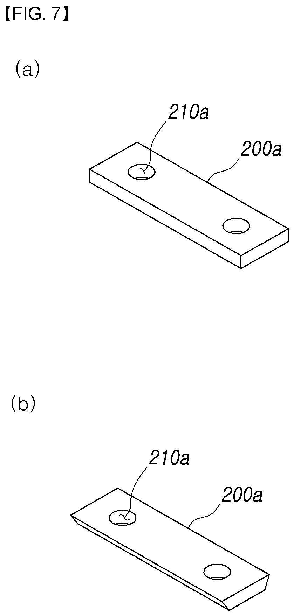

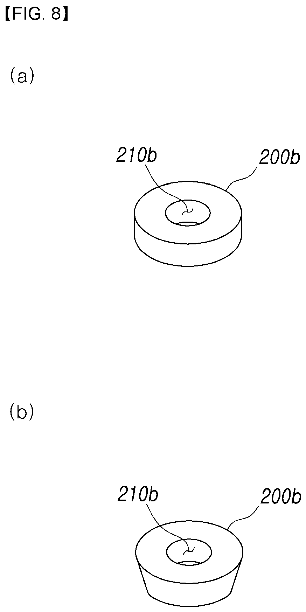

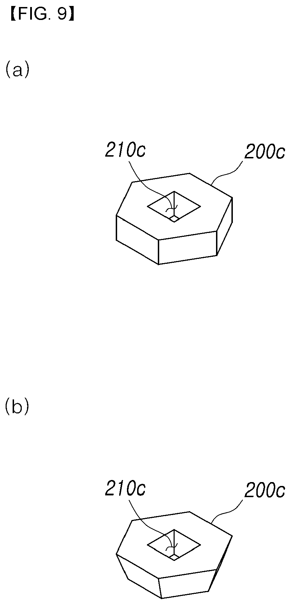

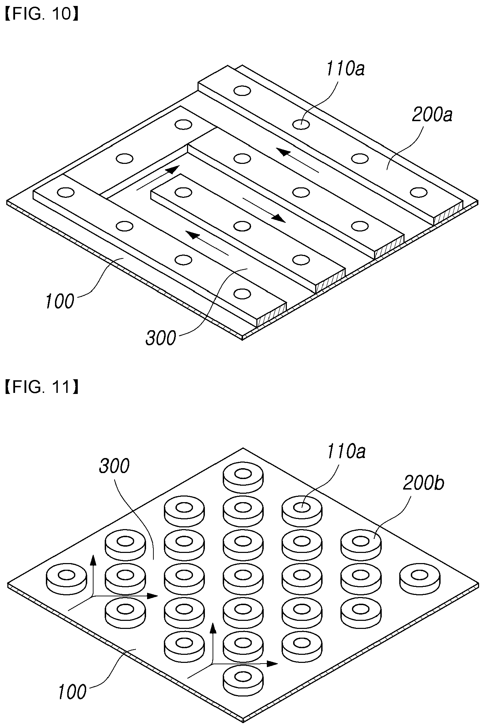

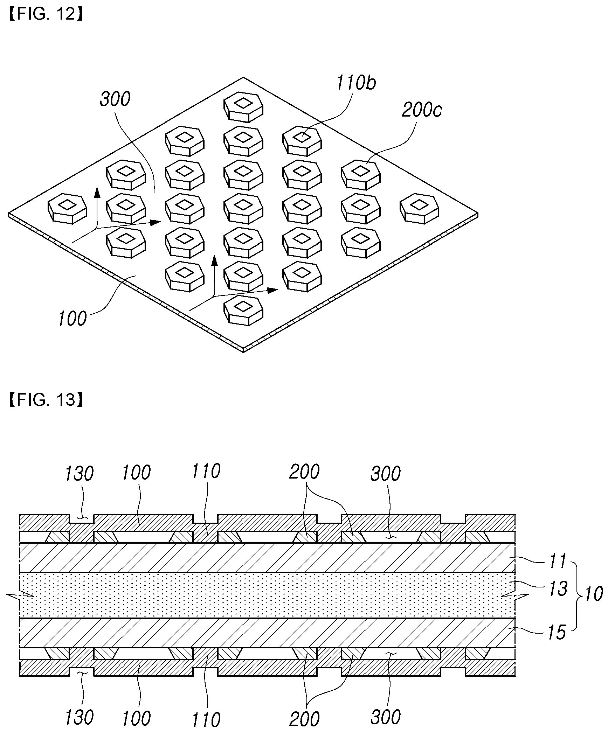

FIG. 1 is an exploded perspective view showing a full layout of a separator plate assembly for a fuel cell according to an embodiment of the present disclosure, FIG. 2 is an assembled perspective view showing the full layout of the separator plate assembly for the fuel cell according to an embodiment of the present disclosure, FIG. 3 is a cross-sectional view taken along the line A-A in FIG. 2 showing the full layout of the separator plate assembly for the fuel cell according to an embodiment of the present disclosure, FIG. 4 is a top view showing an embodiment of the arrangement of coupling protrusions of the present disclosure, FIG. 5 is a top view showing another embodiment of the arrangement of coupling protrusions of the present disclosure, FIG. 6 is a diagram showing a cross section and a partial enlarged view of a press-fit member coupled to the separator plate assembly for the fuel cell according to an embodiment of the present disclosure, FIG. 7 is a perspective view showing a flow path forming block according to an embodiment of the present disclosure, FIG. 8 is a perspective view showing a flow path forming block according to another embodiment of the present disclosure, FIG. 9 is a perspective view showing a flow path forming block according to still another embodiment of the present disclosure, FIG. 10 is a perspective view showing an embodiment of forming a gas flow path by arranging the flow path forming blocks on a base plate of the present disclosure, FIG. 11 is a perspective view showing another embodiment of forming the gas flow path by arranging the flow path forming blocks on the base plate of the present disclosure, FIG. 12 is a perspective view showing still another embodiment of forming the gas flow path by arranging the flow path forming blocks on the base plate of the present disclosure, and FIG. 13 is a cross-sectional view showing a cell of a fuel cell interposed between the separator plate assemblies for fuel cells according to an embodiment of the present disclosure.

As shown in the drawings, the separator plate assembly for the fuel cell capable of forming a variable flow path according to an embodiment of the present disclosure is a separator plate assembly for a solid oxide fuel cell and includes the base plate 100 having a plurality of coupling protrusions 110 protruding in a direction toward one side and arranged spaced apart from each other; at least one flow path forming block 200 having coupling holes 210 which are coupled to the coupling protrusions 110, the flow path forming block 200 arranged on the base plate 100 by the coupling of the coupling protrusions 110 and the coupling holes 210; and the gas flow path 300 formed in varying patterns depending on the shape or arrangement pattern of the flow path forming block 200 and configured to allow a reactive gas supplied from outside to flow therein.

Hereinafter, each component of the present disclosure will be described in detail with reference to FIGS. 1 to 13.

A conventional separator plate for a solid oxide fuel cell has a flow path for allowing a flow of reactive gas, for example, oxygen or hydrogen using an etching process by corrosive reaction between a chemical and a material, and flow path shape processing by etching has uneven processed profiles, low processing precision, long processing time and consequential low productivity.

The present disclosure is characterized in that the separator plate assembly for the solid oxide fuel cell includes the base plate 100 and the flow path forming blocks 200 arranged on the base plate 100, wherein the gas flow path 300 in which reactive gas flows is formed by the flow path forming blocks 200 by arranging the flow path forming blocks 200 on the base plate 100.

Further, the present disclosure is characterized by arranging the flow path forming blocks 200 on the base plate 100 in various patterns, to variably form the pattern of the gas flow path 300 depending on the shape or arrangement pattern of the flow path forming blocks 200.

To begin with, the base plate 100 has the plurality of coupling protrusions 110 protruding in a direction toward one side and arranged spaced apart from each other.

The base plate 100 may be, for example, a plate shaped member having a predetermined area and thickness, and the coupling protrusions 110 protruding in a direction toward one side of the base plate 100 are formed on the base plate 100.

As shown in FIG. 3, the coupling protrusion 110 may be formed and raised on the base plate 100 by stamping that is one of plate manufacturing methods, and the coupling protrusion 110 according to the present disclosure may be formed in various shapes according to each embodiment.

Specifically, as shown in FIGS. 10 and 11, the coupling protrusion 110a according to an embodiment of the present disclosure may be circular in horizontal cross section, and as shown in FIG. 12, the coupling protrusion 110b according to another embodiment of the present disclosure may be polygonal in horizontal cross section.

Meanwhile, the plurality of coupling protrusions 110 may be arranged on the base plate 100, spaced apart from each other, and in this instance, the plurality of coupling protrusions 110 may be arranged in a grid pattern.

In an embodiment, as shown in FIG. 4, the plurality of coupling protrusions 110 may be arranged at a predetermined interval on the same line along the vertical direction of the base plate 100 to form an array (a), and a plurality of arrays (a) may be arranged at a predetermined interval along the horizontal direction of the base plate 100.

In this instance, the distance between the plurality of coupling protrusions 110 forming the array (a) and the distance between the plurality of arrays (a) may be equal or different.

Meanwhile, in another embodiment, as shown in FIG. 5, the plurality of coupling protrusions 110 may be arranged in a zigzag pattern along the vertical direction of the base plate 100 to form an array (a), and a plurality of arrays (a) may be arranged at a predetermined interval along the horizontal direction of the base plate 100.

Meanwhile, as described above, the coupling protrusion 110 may be formed and raised on the base plate 100 by stamping that is one of plate manufacturing methods, and accordingly a recess 130 recessed in a direction toward one side from the other side may be formed on the base plate 100 at a location corresponding to the coupling protrusion 110.

In this instance, the recess 130 may be formed in a shape (horizontal cross section, height, etc.) corresponding to the coupling protrusion 110.

Subsequently, the base plate 100 according to an embodiment of the present disclosure is made of a material including Fe-Cr alloy.

The conventional separator plate for the solid oxide fuel cell essentially includes expensive rare earth elements (La, Zr, etc.) to improve oxidation resistance and electrical conductivity in a high temperature oxidative environment, but the separator plate assembly according to the present disclosure does not include expensive rare earth elements and is based on Fe-Cr alloy.

Here, the base plate 100 may be based on Fe-Cr alloy, and at least one of Mn, Nb or Mo may be included in the Fe-Cr alloy as an additive.

Meanwhile, as shown in FIG. 3, the base plate 100 according to an embodiment of the present disclosure may have a protective coating layer 150.

Here, the protective coating layer 150 may be a Spinel-based coating layer including at least one of La, Mn or Sr, or a Perovskite-based coating layer including at least one of La, Mn or Sr.

The protective coating layer 150 formed on the base plate 100 may prevent the performance degradation of the fuel cell caused by Cr volatilization of the base plate 100, and as shown in FIG. 13, when the coupling protrusion 110 of the base plate 100 contacts a negative electrode (anode) layer 11 or a positive electrode (cathode) layer 15 of a cell 10, the protective coating layer 150 may reduce the interfacial contact resistance (ICR) between the coupling protrusion 110 and the negative electrode layer 11 or the interfacial contact resistance between the coupling protrusion 110 and the positive electrode layer 15, thereby preventing the performance degradation of the fuel cell caused by the increased interfacial contact resistance.

Additionally, in the case of the present disclosure, the flow path forming block 200 as described below is arranged on the base plate 100 by the coupling of the coupling protrusion 110 and the coupling hole 210, and in this instance, a gap may be formed on the interface between the base plate 100 and the flow path forming block 200 and interrupt a normal flow of gas on the gas flow path 300.

Accordingly, the protective coating layer 150 formed on the base plate 100 may improve the interfacial contact between the base plate 100 and the flow path forming block 200, thereby preventing the above-described problem.

Subsequently, the flow path forming block 200 has the coupling hole 210 which is coupled to the coupling protrusion 110, and is arranged on the base plate 100 by the coupling of the coupling protrusion 110 and the coupling hole 210.

The flow path forming block 200 is arranged on the base plate 100 to form the gas flow path 300 on the base plate 100, and the flow path forming block 200 according to an embodiment of the present disclosure is arranged on the base plate 100 by the coupling of the coupling hole 210 and the coupling protrusion 110 of the base plate 100.

The coupling hole 210 may be formed in a shape of a hole passing between one surface and the other surface of the flow path forming block 200 or a groove recessed in a direction toward one side from the other side, and may be formed in a shape corresponding to the shape of the coupling protrusion 110 to allow the coupling protrusion 110 of the base plate 100 to insert and couple.

For example, in case where the coupling protrusion 110a, 110b having the horizontal cross section of a circular or polygonal shape is formed on the base plate 100 and the hole-shaped coupling hole 210 is formed in the flow path forming block 200, the horizontal cross section of the coupling hole 210 may have a shape corresponding to the horizontal cross section of the coupling protrusion 110a, and the length of the coupling hole 210 may be equal to the height of the coupling protrusion 110a.

In this instance, in the case of the hole-shaped coupling hole 210, the height of the flow path forming block 200 is equal to the height of the coupling protrusion 110.

Additionally, in case where the coupling protrusion 110a, 110b having the horizontal cross section of a circular or polygonal shape is formed on the base plate 100 and the groove-shaped coupling hole 210 is formed in the flow path forming block 200, the horizontal cross section of the coupling hole 210 may have a shape corresponding to the horizontal cross section of the coupling protrusion 110a, and the recess depth of the coupling hole 210 may be equal to the height of the coupling protrusion 110a.

Meanwhile, the flow path forming block 200 according to the present disclosure may be arranged on the base plate 100 by press-fitting the coupling protrusion 110 of the base plate 100 into the coupling hole 210 of the flow path forming block 200.

Accordingly, the size of the coupling hole 210 may be smaller than the size of the coupling protrusion 110 by a predetermined amount.

Here, the separator plate assembly for the fuel cell according to the present disclosure may further include the press-fit member 170 which is coupled to the other side of the coupling protrusion 110 and press-fitted into the other side of the flow path forming block 200 when the coupling protrusion 110 is coupled to the coupling hole 210, as shown in FIG. 6, in order to improve the coupling strength of the base plate 100 and the flow path forming block 200.

The press-fit member 170 may be formed in a predetermined ring shape and put on the coupling protrusion 110, and in this instance, when the coupling protrusion 110a is formed in a cylindrical shape as described above, the press-fit member 170 may be formed in a circular ring shape, and when the coupling protrusion 110b is formed in a polygonal shape, the press-fit member 170 may be formed in a polygonal ring shape, and in this instance, the cross section of the press-fit member 170 may have a quadrilateral shape.

The press-fit member 170 is coupled to the other side of the coupling protrusion 110, and when the coupling protrusion 110 is press-fit into the coupling hole 210, the press-fit member 170 is press-fit into the other side of the flow path forming block 200, thereby improving the coupling strength of the base plate 100 and the flow path forming block 200.

Meanwhile, the number of flow path forming blocks 200 according to the present disclosure may be one or more to form various flow path patterns on the base plate 100, and as shown in FIGS. 7 to 9, the flow path forming block 200 may be formed in various shapes including a polygonal or circular shape in horizontal cross section.

The flow path forming block 200 according to the present disclosure is formed in various shapes and arranged on the base plate 100, to variably form the gas flow path 300 of various patterns on the base plate 100.

To begin with, as shown in FIG. 7(A), the flow path forming block 200a according to an embodiment of the present disclosure is characterized by being formed in a quadrilateral prism shape, and having at least two coupling holes 210a in the lengthwise direction.

The flow path forming block 200a according to an embodiment of the present disclosure may be formed in a quadrilateral prism shape having a predetermined length, height and width, and in this instance, the flow path forming block 200a may have at least two coupling holes 210a arranged at a predetermined interval along the lengthwise direction of the flow path forming block 200a.

Here, in addition to the quadrilateral prism shape having the rectangular horizontal cross section, the flow path forming block 200a according to an embodiment of the present disclosure may be formed in a quadrilateral prism shape having a partially bent horizontal cross section such as " 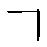 " or " 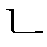 ".

In this instance, the coupling hole 210 of the flow path forming block 200a may have the horizontal cross section of a circular or polygonal corresponding to the shape of the coupling protrusion 110 as described above.

Subsequently, as shown in FIG. 8(A), the flow path forming block 200b according to another embodiment of the present disclosure is characterized by having the horizontal cross section of a circular shape and at least one coupling hole 210b inside.

The flow path forming block 200b according to another embodiment of the present disclosure may be formed in a cylindrical shape having a predetermined diameter and height, wherein the flow path forming block 200b may have at least one coupling hole 210b inside, and in this instance, the horizontal cross section of the coupling hole 210 may have a circular or polygonal shape corresponding to the shape of the coupling protrusion 110 as described above.

Subsequently, as shown in FIG. 9 (A), the flow path forming block 200c according to still another embodiment of the present disclosure is characterized by having the horizontal cross section of a hexagonal shape and at least one coupling hole 210c inside.

Here, the horizontal cross section of the flow path forming block 200c may have, especially, a regular hexagon shape.

The flow path forming block 200c according to still another embodiment of the present disclosure may be formed in a hexagonal prism shape having a predetermined height, and in this instance, the flow path forming block 200c may have at least one coupling hole 210c inside.

In this instance, the coupling hole 210 may be formed with the horizontal cross section of a circular or polygonal shape corresponding to the shape of the coupling protrusion 110 as described above, and in particular, the coupling hole 210c of the flow path forming block 200c according to still another embodiment of the present disclosure is characterized by being formed with the horizontal cross section of a polygonal shape so as to be coupled to the coupling protrusion 110b having the horizontal cross section of a polygonal shape.

When the coupling protrusion 110a is circular in horizontal cross section, the flow path forming block 200a according to an embodiment of the present disclosure as described above has at least two coupling holes 210a inside, and thus it is possible to prevent the pattern of the gas flow path 300 from arbitrarily changing by rotation of the flow path forming block 200a on the base plate 100.

Additionally, since the flow path forming block 200b according to another embodiment of the present disclosure is circular in horizontal cross section, the pattern of the gas flow path 300 does not change by the rotation of the flow path forming block 200b.

However, since the flow path forming block 200c according to still another embodiment of the present disclosure is hexagonal in horizontal cross section, when the flow path forming block 200c rotates, the pattern of the gas flow path 300 changes, and in order to prevent the rotation of the flow path forming block 200c, the coupling hole 210c is formed with the horizontal cross section of a polygonal shape to arrange the flow path forming block 200c on the base plate 100 by the coupling protrusion 110b having the horizontal cross section of a polygonal shape.

Meanwhile, the flow path forming block 200 according to the present disclosure may have the horizontal cross section of a pentagonal shape (including a regular pentagon shape), and one coupling hole 210 inside.

Subsequently, for example, the flow path forming block 200 according to the present disclosure may have a larger area of one surface contacting the negative electrode layer 11 or the positive electrode layer 15 than the area of the other surface to increase the contact area of one surface as shown in FIGS. 7(B), 8(B) and 9(B).

More specifically, the flow path forming block 200 may be formed with a gradient such that it is inclined outward as it goes from the other surface to one surface, and the area of the horizontal cross section increases as it goes from the other surface to one surface.

As shown in FIG. 13, when the separator plate according to the present disclosure is coupled to the cell 10, one surface of the flow path forming block 200 contacts the negative electrode layer 11 or the positive electrode layer 15, and in this instance, as the interfacial contact resistance between one surface of the flow path forming block 200 and the negative electrode layer 11 or the interfacial contact resistance between one surface of the flow path forming block 200 and the positive electrode layer 15 increases, the performance of the fuel cell degrades.

Accordingly, it may be possible to prevent the performance degradation of the fuel cell caused by the increased interfacial contact resistance by increasing the area of one surface of the flow path forming block 200 contacting the negative electrode layer 11 or the positive electrode layer 15 to reduce the interfacial contact resistance between one surface of the flow path forming block 200 and the negative electrode layer 11 or the interfacial contact resistance between one surface of the flow path forming block 200 and the positive electrode layer 15.

Meanwhile, in the same way as the base plate 100, the flow path forming block 200 according to an embodiment of the present disclosure may be made of a material including Fe-Cr alloy.

Additionally, in the same way as the base plate 100, the flow path forming block 200 may have a Spinel-based coating layer including at least one of La, Mn or Sr, or a Perovskite-based coating layer including at least one of La, Mn or Sr on the surface, thereby achieving the technical effect as described above.

Subsequently, the gas flow path 300 is formed in varying patterns depending on the shape or arrangement pattern of the flow path forming blocks 200, to allow reactive gas supplied from the outside to flow therein.

As shown in FIGS. 10 to 12, the gas flow path 300 is formed on the base plate 100 by the flow path forming blocks 200 arranged on the base plate 100.

As described above, in the case of the conventional separator plate for the solid oxide fuel cell, the flow path is formed by etching, but in the case of the separator plate assembly for the fuel cell according to the present disclosure, the gas flow path 300 is formed by the flow path forming blocks 200 arranged on the base plate 100.

In this instance, the gas flow path 300 formed on the base plate 100 may be variably formed in various patterns depending on the shape or arrangement pattern of the flow path forming blocks 200 arranged on the base plate 100.

As described above, the flow path forming block 200 according to the present disclosure may be formed in various shapes including a polygonal or circular shape in horizontal cross section, and various numbers and arrangements of coupling holes 210 may be formed in the flow path forming block 200.

In this instance, since the coupling protrusions 110 are arranged on the base plate 100 in a grid pattern, various numbers of flow path forming blocks 200 formed in various shapes may be arranged on the base plate 100 in various patterns.

Accordingly, it may be possible to variably form the gas flow path 300 of various patterns on the base plate 100, and FIG. 10 shows the gas flow path 300 having a predetermined pattern formed by arranging the flow path forming blocks 200a according to an embodiment of the present disclosure on the base plate 100, FIG. 11 shows the gas flow path 300 having a predetermined pattern formed by arranging the flow path forming blocks 200b according to another embodiment of the present disclosure on the base plate 100, and FIG. 12 shows the gas flow path 300 having a predetermined pattern formed by arranging the flow path forming blocks 200c according to still another embodiment of the present disclosure on the base plate 100.

As described above, the present disclosure is characterized in that various gas flow paths 300 may be variably formed on the base plate 100 by variously changing the arrangement of the coupling protrusions 110 on the base plate 100 and the shape and the arrangement pattern of the flow path forming blocks 200.

Meanwhile, FIG. 13 shows the cell 10 including the negative electrode layer 11, the electrolyte layer 13 and the positive electrode layer 15 between the separator plate assemblies for the fuel cells according to the present disclosure.

As shown in FIG. 13, the cell 10 of the fuel cell may be interposed between the separator plate assemblies for the fuel cells according to the present disclosure, and in this instance, hydrogen may be supplied and flow in the gas flow path 300 of the separator plate assembly for the fuel cell disposed on the negative electrode layer 11 of the cell 10, and oxygen may be supplied and flow in the gas flow path 300 of the separator plate assembly for the fuel cell disposed on the positive electrode layer 15 of the cell 10.

As described above, according to an embodiment of the present disclosure, the gas flow path may be formed by arranging the flow path forming blocks on the base plate rather than forming the gas flow path in the base plate by an etching process, thereby improving precision and productivity in flow path shape processing.

Additionally, it may be possible to variably form various gas flow paths on the base plate by arranging the coupling protrusions on the base plate in a grid pattern and arranging the flow path forming blocks of various shapes and numbers in various patterns.

While the exemplary embodiments of the present disclosure have been hereinabove illustrated and described, the present disclosure is not limited to the above-described particular exemplary embodiments, and it is obvious to those having ordinary skill in the technical field pertaining to the present disclosure that a variety of modifications and changes may be made thereto without departing from the claimed subject matter of the present disclosure in the appended claims, and such modifications and changes fall in the scope of the appended claims.

## Claims

1. A separator plate assembly for a solid oxide fuel cell capable of forming a variable flow path, comprising:
a base plate having a plurality of coupling protrusions protruding in a direction toward one side and arranged spaced apart from each other;
at least one flow path forming block having coupling holes which are coupled to the coupling protrusions, the flow path forming block arranged on the base plate by the coupling of the coupling protrusions and the coupling holes; and
a gas flow path formed in varying patterns depending on a shape or arrangement pattern of the flow path forming block, and configured to allow a reactive gas supplied from outside to flow therein.

2. The separator plate assembly for the fuel cell capable of forming the variable flow path according to claim 1, wherein the plurality of coupling protrusions is arranged in a grid pattern.

3. The separator plate assembly for the fuel cell capable of forming the variable flow path according to claim 1, wherein the flow path forming block is formed in a quadrilateral prism shape, and has at least two coupling holes in a lengthwise direction.

4. The separator plate assembly for the fuel cell capable of forming the variable flow path according to claim 1, wherein the flow path forming block is circular in horizontal cross section, and has at least one coupling hole inside.

5. The separator plate assembly for the fuel cell capable of forming the variable flow path according to claim 1, wherein the flow path forming block is hexagonal in horizontal cross section, and has at least one coupling hole inside.

6. The separator plate assembly for the fuel cell capable of forming the variable flow path according to claim 1, wherein the base plate is made of a material including a Fe-Cr alloy.
